# EUROPÄISCHE PATENTSCHRIFT

(11) **EP 3 732 094 B1**
(45) Veröffentlichungstag und Bekanntmachung des Hinweises auf die Patenterteilung: **20.10.2021**
(21) Anmeldenummer: 19702388.0
(22) Anmeldetag: 28.01.2019
(51) Int. Cl.: B62K 19/34, B62M 6/55

(54) **FAHRRADRAHMEN, ELEKTROFAHRRAD UND ADAPTERSET**
BICYCLE FRAME, ELECTRIC BICYCLE AND ADAPTER SET
CADRE DE BICYCLETTE, BICYCLETTE ÉLECTRIQUE ET JEU D'ADAPTATEURS

(30) Priorität: 26.01.2018 DE 102018000639
(43) Veröffentlichungstag der Anmeldung: 04.11.2020
(73) Patentinhaber: Biketec AG, 4950 Huttwil (CH)
(72) Erfinder: WÖLK, Timo, 83730 Fischbachau (DE); SUTER, Philipp, 6032 Emmen (CH); AFZAL, Omar, 81379 München (DE); LANZ, Simon, 4955 Gondiswil (CH); DURDEVIC, Ivica, 6146 Grossdietwil (CH)
(74) Vertreter: Isarpatent
(86) Internationale Anmeldenummer: PCT/EP2019/051997
(87) Internationale Veröffentlichungsnummer: WO 2019/145533

(56) Entgegenhaltungen:
- EP-A1- 2 611 682
- WO-A1-2017/020145
- CN-A- 106 160 298
- CN-U- 203 064 149

## Beschreibung

Die vorliegende Erfindung betrifft einen Fahrradrahmen gemäß dem Oberbegriff des Anspruchs 1, sowie ein Elektrofahrrad.

Elektrofahrräder, beispielsweise Pedelecs oder E-Bikes, erfreuen sich als leicht zu handhabendes, emissionsfreies Fortbewegungsmittel großer Beliebtheit. Für unterschiedliche Einsatzfelder sind besonders geeignete Fahrradtypen verfügbar. Hierzu gehören u.a. für den Freizeiteinsatz oder den Weg zur Arbeit auf der Straße oder im leichten Gelände optimierte Fahrräder in verschiedenen Ausführungen.

Fahrradrahmen für Elektrofahrräder mit Mittelmotorantrieb weisen eine Aufnahmeeinrichtung für die als Tretlagerantrieb ausgebildete Antriebseinheit auf. Die Aufnahmeeinrichtung ist an die verwendete Antriebseinheit angepasst. Aufgrund der Vielzahl unterschiedlicher Antriebseinheiten sind Fahrradrahmen mit entsprechend unterschiedlichen Aufnahmeeinrichtungen vorzusehen. Der Fahrradhersteller muss für unterschiedliche Antriebsgehäusetypen jeweils einen eigenen Fahrradrahmen mit angepasster Aufnahmevorrichtung fertigen. Dies ist für die Hersteller ein erheblicher Mehraufwand. Der Austausch des verbauten Antriebssystems gegen eine Antriebseinheit anderer Bauart oder eines anderen Herstellers ist aufgrund der abweichenden mechanischen Schnittstellen des Antriebsgehäuses regelmäßig nicht möglich. Ferner ist die elektrische Schnittstelle ebenfalls nicht einheitlich, so dass diesbezüglich ebenfalls für jeden Antrieb eigene Anschlusskonzepte erforderlich sind.

Aus der WO 2016/206731 A1 ist ein Adaptersystem zur Verbindung einer rahmenseitigen Aufnahmeeinrichtung mit der jeweiligen Antriebseinheit vorgeschlagen, wobei rahmenseitig eine standardisierte Aufnahmeeinrichtung für die Antriebseinheit vorgesehen ist und je nach Art der Antriebseinheit ein entsprechender Adapter verwendet wird. Ein Befestigungsflansch der Antriebseinheit wird hierbei von dem Adapter abschnittsweise umgriffen.

Nachteilig ist hierbei die konstruktiv nicht vollständige Rahmenintegration im Bereich der Anordnung Aufnahmeeinrichtung-Adapter-Antriebseinheit. Beispielsweise sind bei derartigen Lösungen seitliche Blenden zur Abdeckung erforderlich. Insbesondere unter optischen Aspekten können diese Elektrofahrräder den Ansprüchen eines Lifestylebetonten, sportlich ambitionierten Fahrers nicht gerecht werden. Ferner nachteilig ist die fehlende elektrische Schnittstelle.

Ferner beschreibt beispielsweise die Druckschrift EP 2 611 682 A1 ein Montageset zur Montage eines Elektromotors an ein Fahrrad, das einen Adapter zur Befestigung des Elektromotors aufweist über dessen Befestigungslöcher der Adapter an mindestens einer Seite des Tretlagerrohrs mittels Schrauben an einer Aufnahme befestigbar ist.

Die Druckschrift WO 2017/020145 A1 beispielsweise beschreibt eine Motorhalterung für Elektroräder.

Der Erfindung liegt daher die Aufgabe zugrunde, ein Fahrradkonzept bereitzustellen, welches die Ansprüche sportlich und Lifestyle-orientierter Radfahrer erfüllt.

Diese Aufgabe wird durch einen Fahrradrahmen für ein Elektrofahrrad mit der Merkmalskombination des Anspruchs 1, ein Elektrofahrrad mit der Merkmalskombination des Anspruchs 13 sowie einem nicht beanspruchten Adapterset gelöst.

Ein erfindungsgemäßer Fahrradrahmen weist eine Aufnahmeeinrichtung für eine Antriebseinheit, insbesondere für einen Tretlagerantrieb auf, wobei ein Adapter zur Verbindung der Aufnahmeeinrichtung mit der Antriebseinheit vorgesehen ist. Erfindungsgemäß ist der Adapter plattenförmig mit einem ersten Adapterschenkel und einem zweiten Adapterschenkel ausgebildet und zwischen der rahmenseitigen Aufnahmeeinrichtung und der Antriebseinheit angeordnet. Dadurch kann sich der Querschnitt der rahmenseitigen Aufnahmeeinrichtung mit dem Querschnitt des Adapters zu einem technisch und optisch höchsten Ansprüchen genügenden Gesamtquerschnitt ergänzen. Erfindungsgemäß ist ferner der Bauraumbedarf minimiert, so dass Handlichkeit und Agilität verbessert sind. Insbesondere bei einer Tiefeinsteigerbauweise wird ein maximal möglicher Einstiegsbereich erreicht. Nicht zuletzt wirkt das hochintegrierte Design ansprechend markenbetont. Das erfindungsgemäße Konzept wird daher auch den Ansprüchen eines lifestyle betonten, sportlich ambitionierten Fahrers gerecht.

Der erfindungsgemäße Adapter stellt neben der mechanischen Schnittstelle besonders bevorzugt auch eine elektrische Schnittstelle bereit. Entsprechend kann je nach Antriebsbauart, Bohrungsbild und/oder elektrischen Anschlüssen der Antriebseinheit und/oder eines rahmenseitigen Batteriepacks ein entsprechender Adapter verwendet werden. Der Adapter kann ein elektrisches Interface zwischen Antrieb und Batteriepack ausbilden. Hierzu kann der Adapter neben mechanischen Anschlüssen auch elektronische Komponenten aufweisen.

Insgesamt wird ein modulares Konzept ermöglicht, welches beispielsweise kostenoptimierte Plattform-Konstruktionen erlaubt. Eine Plattform bezeichnet hierbei eine technische Basis, auf der verschiedene Fahrradmodelle aufbauen und in welche eine Vielzahl von Antriebs- und Batterieanordnungen integrierbar sind.

Gemäß einer besonders bevorzugten Ausführungsform ist der Fahrradrahmen als Tiefeinsteigerrahmen ohne Oberrohr ausgebildet. Der Fahrradrahmen weist hierbei ein Unterrohr, ein Sitzrohr und einen Hinterbau auf, welche mittels der Aufnahmeeinrichtung für die Antriebseinheit verbunden sind. Hierbei kommen die Vorteile des erfindungsgemäßen Adapters besonders zur Geltung, da dieser aufgrund der plattenförmigen Bauweise mit kleinen Querschnitten für einen maximal großen und tiefen Einstiegsbereich ausgeführt sein kann. Ein optisch ansprechendes homogenes Design wird erreicht.

Bei einem bevorzugten Ausführungsbeispiel weist der Adapter zwei Adapterschenkel auf, welche L-förmig miteinander verbunden sind. Die Adapterschenkel sind vorzugsweise derart ausgeführt, dass diese sowohl bündig mit der Aufnahmeeinrichtung als auch der Antriebseinheit abschließen. Insgesamt wird ein technisch und optisch höchsten Ansprüchen genügender Gesamtquerschnitt erreicht.

Als besonders vorteilhaft hat es sich erwiesen, wenn die Adapterschenkel eine Längserstreckung aufweisen und mittels eines Übergangsradius verbunden sind. Der Übergangsradius entspricht vorzugsweise rahmenseitig im Wesentlichen dem Radius der Aufnahmeeinrichtung und antriebsseitig dem Radius der Antriebseinheit, d. h. des Antriebsgehäuses.

Ein erster Adapterschenkel ist vorzugsweise oberhalb des Tretlagerantriebs dem Sitzrohr und Unterrohr sowie ein zweiter Adapterschenkel dem Hinterbau zugewandt angeordnet.

Vorzugsweise ist der erste Adapterschenkel länger als der zweite Adapterschenkel ausgebildet. Dadurch ist der Adapter sowohl an die Geometrie der Schnittstelle zur Antriebseinheit als auch zur rahmenseitigen Aufnahmeeinrichtung angepasst.

Als vorteilhaft hat es sich erwiesen, wenn die beiden Adapterschenkel einen Winkel im Bereich von etwa 80 bis 130 Grad zueinander einschließen.

Bei einer nicht beanspruchten Ausführungsvariante weist der Adapter eine konstante Dicke auf. Bei dieser Lösung sind die Adapterschenkel gleich dick ausgebildet. In Anpassung an die Antriebseinheit wird ein Adapter mit entsprechender Dicke gewählt, so dass Fahrradrahmen, Adapter und Antriebseinheit eine bündige Gesamteinheit bilden. Beispielsweise wird für eine kleine Antriebseinheit ein dicker Adapter verwendet. Entsprechend wird für eine größere Antriebseinheit ein dünner Adapter verwendet.

Erfindungsgemäß weist zumindest ein Adapterschenkel mindestens abschnittsweise eine gegenüber dem weiteren Adapterschenkel vergrößerte Dicke auf. Bei dieser Lösung sind die Adapterschenkel zumindest abschnittsweise unterschiedlich dick ausgebildet.

Bei einer bevorzugten Ausführungsvariante des Fahrradrahmens hat zumindest ein Adapterschenkel eine gegenüber dem anderen Adapterschenkel konstant vergrößerte Dicke.

Die Dicken, das Dickenverhältnis und/oder der Dickenverlauf sind entsprechend der Antriebseinheit derart ausgeführt, dass Fahrradrahmen, Adapter und Antriebseinheit eine bündige Gesamteinheit bilden.

Als besonders vorteilhaft hat es sich erwiesen, wenn der Adapter den Bauraum zwischen der Aufnahmeeinrichtung und der jeweiligen Antriebseinheit vollständig ausfüllt.

Der Adapter schließt vorzugsweise entlang des gesamten Umfangs bündig mit der Aufnahmeeinrichtung ab. Die Antriebseinheit kann nach unten überstehend montiert sein.

Hierbei wird eine äußerst kompakte, homogene Rahmenform erreicht, welche die Design- und Festigkeitserfordernisse formschön erfüllt.

Zumindest ein Adapterschenkel weist bei einem Ausführungsbeispiel mindestens abschnittsweise eine gegenüber dem anderen, insbesondere zweiten Adapterschenkel vergrößerte Länge auf.

Vorzugsweise ist die Dicke eines Adapterschenkels von einem Verbindungsabschnitt zum zweiten Adapterschenkel hin zu seinem freien Ende zunehmend ausgebildet. Hierbei ist ein Dickenverlauf vorgesehen. Der Dickenverlauf kann stetig sein. Alternativ kann der Dickenverlauf bogenförmig gekrümmt oder mehrfach gekrümmt sein.

Bei einer bevorzugten Ausführungsform ist zumindest ein Adapterschenkel keilförmig ausgebildet. Dadurch wird eine optimale Position einer entsprechenden Antriebseinheit erreicht. Als vorteilhaft hat es sich hierbei erwiesen, wenn eine breite Seite des dreieckigen Querschnitts in Fahrtrichtung vorne angeordnet ist.

Als besonders vorteilhaft hat es sich erwiesen, wenn der Adapter eine rahmenseitige Anlagefläche mit standardisierten Halteelementen zur Fixierung am Fahrradrahmen aufweist. Die Halteelemente sind vorzugsweise auf der Anlagefläche angeordnet und beabstandet vom Rand des Adapters. Dadurch kann die Außenseite des Adapters bündig mit der Aufnahmeeinrichtung und/oder der Antriebseinheit verlaufen.

Die rahmenseitige Anlagefläche ist vorzugsweise an die Geometrie der rahmenseitigen Aufnahmeeinrichtung angepasst.

Weiterhin ist es besonders vorteilhaft, wenn der Adapter eine antriebsseitige Anlagefläche mit an die Antriebseinheit angepassten Haltelementen aufweist. Die Halteelemente sind vorzugsweise auf der Anlagefläche angeordnet und beabstandet vom Rand des Adapters. Dadurch kann die Außenseite des Adapters bündig mit der Aufnahmeeinrichtung und/oder der Antriebseinheit verlaufen.

Die antriebsseitige Anlagefläche ist vorzugsweise an die Geometrie der Antriebseinheit, insbesondere an die des Getriebegehäuses angepasst.

Ein formschönes Gesamtdesign ohne störende Stufen und Kanten ist ermöglicht.

Die Haltelemente sind vorteilhafterweise sich von dem Adapter weg erstreckende Befestigungslaschen zur Aufnahme von Befestigungselementen, wie insbesondere Befestigungsschrauben ausgebildet. Die Haltelaschen können Haltewinkel sein und erstrecken sich vorzugsweise in einem Winkel von etwa 90 Grad zu den Anlageflächen.

Zumindest eine der Haltelaschen ist vorzugsweise einstückig mit dem Adapter ausgebildet. Alternativ sind die Haltelaschen an dem Adapter stoff- und/oder formschlüssig fixiert.

Vorzugsweise erstrecken sich die Längsachsen der Aufnahme und damit die Schraubenlängsachsen parallel zur Anlagefläche und quer zur Fahrtrichtung. Vorzugsweise verlaufen die Schraubenlängsachsen parallel zueinander.

Als besonders vorteilhaft hat es sich hierbei erwiesen, dass lediglich kleine, seitliche Öffnungen zum Einführen und Verschrauben der Befestigungsschrauben erforderlich sind. Diese können anschließend mit Blindstopfen abgedeckt werden. Eine homogene Außenfläche der Einheit Rahmen-Adapter-Antrieb wird erreicht.

Ein erfindungsgemäßes Elektrofahrrad, beispielsweise ein Tiefeinsteigerfahrrad, weist einen Fahrradrahmen aufweisend eine Aufnahmeeinrichtung für eine Antriebseinheit auf, wobei ein Adapter zur Verbindung der Aufnahmeeinrichtung mit der Antriebseinheit vorgesehen ist. Erfindungsgemäß ist der Adapter plattenförmig ausgebildet und zwischen der rahmenseitigen Aufnahmeeinrichtung und der Antriebseinheit angeordnet, wobei der Adapter zumindest einen ersten Adapterschenkel und einen zweiten Adapterschenkel aufweist.

Das Elektrofahrrad hat dadurch einen optimierten Rahmenquerschnitt mit konstruktiv und ästhetisch besten Eigenschaften bei minimiertem Bauraumbedarf.

Ein nicht beanspruchtes Adapterset für einen Fahrradrahmen mit einer Aufnahmeeinrichtung für eine Antriebseinheit, wobei rahmenseitig eine standardisierte Aufnahmeeinrichtung für eine Antriebseinheit vorgesehen ist und je nach Art der Antriebseinheit ein entsprechender Adapter verwendet wird, verwendet Adapter, die plattenförmig ausgebildet und zwischen der rahmenseitigen Aufnahmeeinrichtung und der Antriebseinheit anordbar sind, wobei die Adapter zumindest einen ersten Adapterschenkel und einen zweiten Adapterschenkel aufweisen.

Die Adapter weisen ferner an einem oder beiden Adapterschenkeln eine unterschiedliche Dicke oder einen Dickenverlauf auf. In Anpassung an die Antriebseinheit wird ein Adapter mit entsprechender Dicke gewählt, so dass Fahrradrahmen, Adapter und Antriebseinheit eine bündige Gesamteinheit bilden.

Der Adapter erstreckt sich vorzugsweise bis in den Bereich der Aufnahmeeinrichtung und der Antriebseinrichtung. Bei einer besonders bevorzugten Ausführungsform des Rahmens decken die Außenflächen des Adapters den Bereich zwischen Aufnahmeeinrichtung und Antriebseinrichtung vollständig ab.

Die Außenkontur der rahmenseitigen Aufnahmeeinrichtung ergänzt sich mit der Außenkontur des Adapters zu einer technisch und optisch höchsten Ansprüchen genügenden Gesamtkontur. Mit dieser Anordnung wird ferner ein bestmöglicher Schutz gegen das Eindringen von Fremdkörpern und Feuchtigkeit erreicht.

Die Erfindung kann universell bei allen Typen von Fahrrädern realisiert werden und somit letztlich ein City-, Touren-, oder Mountainbike oder andere moderne Fahrradtypen ergeben. Sie ermöglicht aufgrund der kompakten, formschönen Bauweise den Aufbau von Rädern, die weitgehend die Vorzüge eines klassischen Fahrrads und eines Elektrofahrrads in sich vereinen.

Da sich das erfindungsgemäße Fahrrad äußerlich kaum von sonstigen modern und sportlich gestalteten Rädern abhebt, wird die Konstruktion dem sportlichen und Lifestyle-Anspruch breiter Nutzergruppen gerecht. Die mögliche unauffällige Integration des Elektroantriebkonzepts ist formschön.

Weitere bevorzugte Ausführungsformen sind Gegenstand der Unteransprüche.

Im Folgenden werden bevorzugte Ausführungsformen unter Bezugnahme auf die beiliegenden Zeichnungen näher erläutert. Dabei zeigen die Zeichnungen im Einzelnen:
Figur 1 eine Seitenansicht eines nicht beanspruchten, als Tiefeinsteigerrahmen ausgebildeten Fahrradrahmens,
Figur 2 eine räumliche Detailansicht des Fahrradrahmens gemäß der Figur 1 im Bereich des Adapters,
Figur 3 eine Explosionszeichnung des Rahmendetails aus Figur 2,
Figur 4 eine Explosionszeichnung des Rahmens aus Figur 1,
Figuren 5 bis 7 eine Seitenansicht, eine Explosionszeichnung und eine weitere Explosionszeichnung eines zweiten, nicht beanspruchten Ausführungsbeispiels eines Fahrradrahmens und die Figuren 8 und 9 eine Seitenansicht und eine Explosionszeichnung der erfindungsgemässen Ausführung.

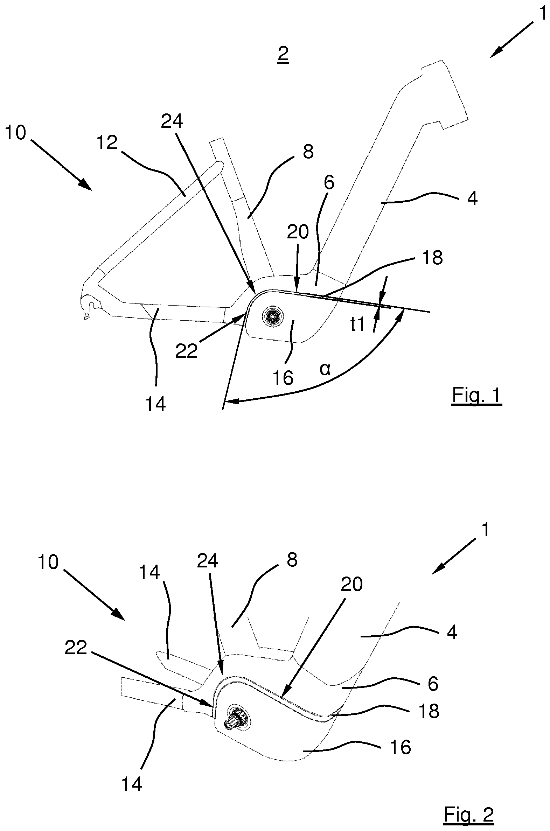

Figur 1 zeigt eine schematische Seitenansicht eines als Tiefeinsteigerrahmen ausgebildeten Fahrradrahmens 1 eines Elektrofahrrads 2 aufweisend ein Unterrohr 4, das mittels einer Aufnahmeeinrichtung 6 (Motorhalterung bzw. Motorbracket) mit einem Sitzrohr 8 und einem Hinterbau 10 verbunden ist. Der Hinterbau 10 weist zwei Sitzstreben 12 und zwei Unterstreben 14 auf. Die Aufnahmeeinrichtung 6 ist zur Aufnahme einer als Tretlagerantrieb 16 ausgebildeten Antriebseinheit vorgesehen. Der Tretlagerantrieb 16 ist mit einem Antriebsgehäuse versehen.

Zur Verbindung der Aufnahmeeinrichtung 6 mit der Antriebseinheit 16 ist ein Adapter 18 vorgesehen. Erfindungsgemäß ist der Adapter 18 plattenförmig mit einem ersten Adapterschenkel 20 und einem zweiten Adapterschenkel 22 ausgebildet und zwischen der rahmenseitigen Aufnahmeeinrichtung 6 und der Antriebseinheit 16 angeordnet. Dadurch ergänzt sich der Querschnitt der rahmenseitigen Aufnahmeeinrichtung 6 mit dem Querschnitt des Adapters 18 zu einem technisch und optisch höchsten Ansprüchen genügenden Gesamtquerschnitt. Das hochintegrierte Design wirkt ansprechend markenbetont. Das Rahmenkonzept erfüllt daher auch die Ansprüche eines lifestyle betonten, sportlich ambitionierten Fahrers.

Die Adapterschenkel 20, 22 sind L-förmig miteinander verbunden, wobei der erste Adapterschenkel 20 länger als der zweite Adapterschenkel 22 ist. Bei der dargestellten Variante ist der erste Adapterschenkel 20 etwa doppelt so lang wie der zweite Adapterschenkel 22. Dadurch ist der Adapter sowohl an die Geometrie der Schnittstelle zur Antriebseinheit 16 als auch zur rahmenseitigen Aufnahmeeinrichtung 6 angepasst.

Wie insbesondere Figur 2 zu entnehmen ist, welche eine räumliche Detailansicht der Figur 1 im Bereich des Adapters 18 zeigt, sind die Adapterschenkel 20, 22 derart ausgeführt, dass diese sowohl bündig mit der Aufnahmeeinrichtung 6 als auch mit der Antriebseinheit 16 abschließen. Der erste Adapterschenkel 20 ist oberhalb des Tretlagerantriebs 16 dem Sitzrohr 8 und Unterrohr 4 sowie der zweite Adapterschenkel 22 dem Hinterbau 10 zugewandt angeordnet.

Als konstruktiv vorteilhaft hat es sich erwiesen, wenn die beiden Adapterschenkel 20, 22 einen Winkel α im Bereich von etwa 80 bis 130 Grad zueinander einschließen. Bei dem dargestellten Adapter 18 beträgt der Winkel α etwa 97 Grad (siehe Figur 1).

Die beiden Adapterschenkel 20, 22 sind gerade ausgebildet und mittels eines Übergangsradius 24 verbunden. Der Übergangsradius 24 entspricht rahmenseitig dem Radius der Aufnahmeeinrichtung 6 und antriebsseitig dem Radius der Antriebseinheit 16, d. h. dem Radius des Antriebsgehäuses. Der Übergangsradius 24 ist im Bereich des Sitzrohrs 8 vorgesehen.

Der Adapter 18 weist eine konstante Dicke tl auf. Die Adapterschenkel 20, 22 sind gleich dick ausgebildet. In Anpassung an die Antriebseinheit 16 wurde ein Adapter 18 mit entsprechender Dicke tl derart gewählt, dass Fahrradrahmen 1, Adapter 18 und Antriebseinheit 16 eine bündige Gesamteinheit bilden. Entsprechend ist für die dargestellte verhältnismäßig große Antriebseinheit 16 ein relativ dünner Adapter 18 verwendet.

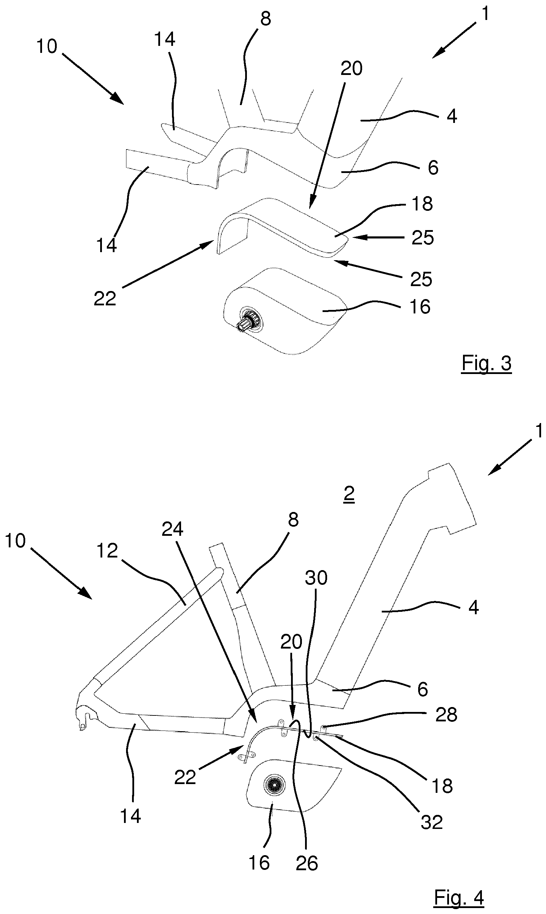

Figur 3 zeigt eine Explosionszeichnung des Rahmendetails aus Figur 2, gemäß der Eckbereiche 25 des Adapters 18 entsprechend der Gehäusevorderseite der Antriebseinheit 16 und der Aufnahmeeinrichtung 6 im Unterrohrbereich abgerundet sind.

Wie Figur 4 zu entnehmen ist, welche eine Explosionszeichnung des Rahmens aus Figur 1 zeigt, weist der Adapter 18 eine rahmenseitige Anlagefläche 26 mit standardisierten Halteelementen 28 zur Fixierung an der Aufnahmeeinrichtung 6 des Fahrradrahmen auf. Die Halteelemente 28 sind auf der Anlagefläche 26 beabstandet vom Rand des Adapters 18 angeordnet.

Entsprechend hat der Adapter 18 eine antriebsseitige Anlagefläche 30 mit an die Antriebseinheit 16 angepassten Haltelementen 32. Die Halteelemente 32 sind auf der Anlagefläche 30 angeordnet und ebenfalls beabstandet vom Rand des Adapters 18. Dadurch verläuft die Außenseite des Adapters 18 nach der Montage bündig mit der Aufnahmeeinrichtung 6 und der Antriebseinheit 16.

Die Haltelemente 28, 32 sind als sich von dem Adapter 18 weg erstreckende Befestigungslaschen bzw. Haltewinkel zur Aufnahme von nicht dargestellten, als Befestigungsschrauben ausgebildeten Befestigungselementen vorgesehen. Die Haltelaschen 28, 32 sind einstückig mit dem Adapter ausgebildet und erstrecken sich in einem Winkel von etwa 90 Grad zu den jeweiligen Anlageflächen 26, 30. Die Längsachsen der Aufnahme und damit die Schraubenlängsachsen erstrecken sich parallel zur jeweiligen Anlagefläche 26, 30 und quer zur Fahrtrichtung, so dass die Schraubenlängsachsen parallel zueinander verlaufen. Dadurch sind lediglich kleine, seitliche Öffnungen zum Einführen und Verschrauben der Befestigungsschrauben erforderlich (nicht dargestellt). Diese können anschließend mit Blindstopfen abgedeckt werden. Eine homogene Außenfläche der Einheit Rahmen-Adapter-Antrieb wird erreicht.

Bei der dargestellten Ausführungsform des Fahrradrahmens 1 als Tiefeinsteigerrahmen kommen die Vorteile des Adapters 18 besonders zur Geltung, da dieser aufgrund der plattenförmigen Bauweise mit kleinen Querschnitten für einen maximal großen und tiefen Einstiegsbereich ausgeführt sein kann.

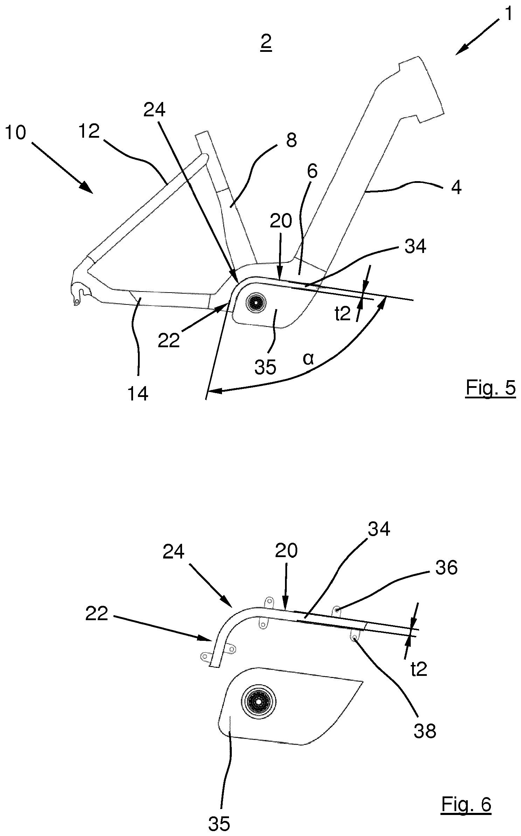

In den Figuren 5 bis 7 ist ein Ausführungsbeispiel eines Fahrradrahmens dargestellt, gemäß dem ein Adapter 34 eine gegenüber dem ersten Ausführungsbeispiel vergrößerte Dicke t2 aufweist. Dadurch kann eine Antriebseinheit 35 kleinerer Bauart aufgenommen werden. Standardisierte rahmenseitige Haltelaschen 36 entsprechen der Anordnung gemäß dem Adapter des ersten Ausführungsbeispiels. Die Anordnung von antriebsseitigen Haltelaschen 38 ist an die kompakte Antriebseinheit 34 angepasst (siehe Figur 6).

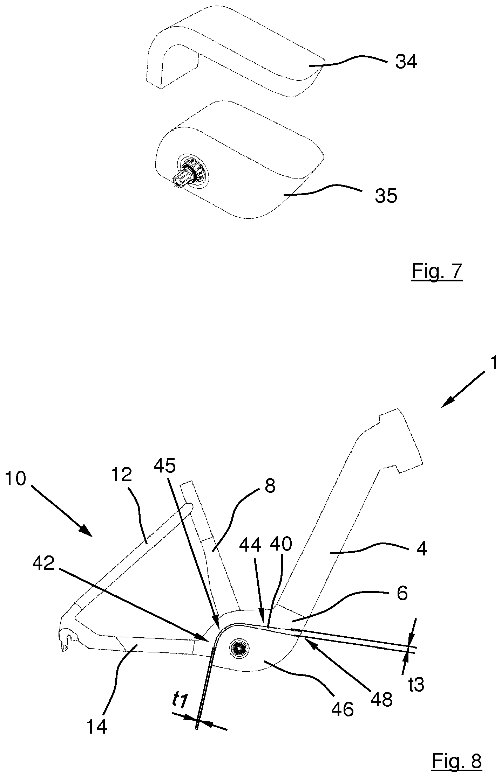

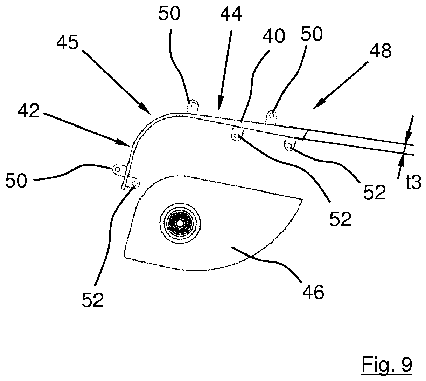

In den Figuren 8 und 9 ist ein weiteres Ausführungsbeispiel dargestellt, gemäß dem ein Adapter 40 einen Adapterschenkel 42 mit konstanter Dicke tl aufweist und die Dicke eines zweiten Adapterschenkels 44 von einem Übergangsradius 45 hin zum freien Endabschnitt 48 stetig zunimmt, so dass dieser Schenkel keilförmig ausgebildet ist. Eine breite Seite des dreieckigen Querschnitts ist in Fahrtrichtung vorne angeordnet und hat die maximale Dicke t3. Dadurch ist eine kompakte Antriebseinheit 46 geometrisch optimal angeordnet. Die rahmenseitigen Haltelaschen 50 sind standardisiert entsprechend den vorhergehenden Adaptern angeordnet. Die Anordnung von antriebsseitigen Haltelaschen 52 ist an die Anschlussgeometrie der kompakten Antriebseinheit 46 angepasst.

Die beschriebenen Adapter 18, 34, 40 bilden ein nicht beanspruchtes Adapterset aus, wobei rahmenseitig eine standardisierte Aufnahmeeinrichtung für die Adapter vorgesehen ist und je nach Bauart, Bohrungsbild und/oder elektrischen Anschlüssen der Antriebseinheit und/oder dem Batteriepack ein entsprechender Adapter verwendet wird.

Die Dicken, das Dickenverhältnis und der Dickenverlauf sind entsprechend der jeweiligen Antriebseinheit ausgeführt, so dass Fahrradrahmen, Adapter und Antriebseinheit eine bündige Gesamteinheit bilden. Hierbei wird eine äußerst kompakte, homogene Rahmenform erreicht, welche die Festigkeitserfordernisse formschön erfüllt. Das Elektrofahrrad hat dadurch einen optimierten Rahmenquerschnitt mit konstruktiv und ästhetisch besten Eigenschaften bei minimiertem Bauraumbedarf.

Die Außenkontur der rahmenseitigen Aufnahmeeinrichtung ergänzt sich mit der Außenkontur des Adapters zu einer technisch und optisch höchsten Ansprüchen genügenden Gesamtkontur. Mit dieser Anordnung wird ferner ein bestmöglicher Schutz gegen das Eindringen von Fremdkörpern und Feuchtigkeit erreicht.

Offenbart ist ein Fahrradrahmen 1 mit einer Aufnahmeeinrichtung 6 für eine Antriebseinheit 16, 35, 46, insbesondere für einen Tretlagerantrieb, wobei ein Adapter 18, 34, 40 zur Verbindung der Aufnahmeeinrichtung 6 mit der Antriebseinheit 16, 35, 46 vorgesehen ist, wobei der Adapter 18, 34, 40 plattenförmig mit einem ersten Adapterschenkel 20, 44 und einem zweiten Adapterschenkel 22, 42 ausgebildet und zwischen der rahmenseitigen Aufnahmeeinrichtung 6 und der Antriebseinheit 16, 35, 46 angeordnet ist. Weiterhin offenbart sind ein Elektrofahrrad mit einem derartigen Fahrradrahmen sowie ein nicht beanspruchtes Adapterset mit mehreren Adaptern.

### Bezugszeichenliste

- 1: Fahrradrahmen
- 2: Elektrofahrrad
- 4: Unterrohr
- 6: Aufnahmeeinrichtung
- 8: Sitzrohr
- 10: Hinterbau
- 12: Sitzstrebe
- 14: Unterstrebe
- 16: Antriebseinheit
- 18: Adapter
- 20: erster Adapterschenkel
- 22: zweiter Adapterschenkel
- 24: Übergangsradius
- 25: Eckbereich
- 26: rahmenseitige Anlagefläche
- 28: Halteelemente
- 30: antriebsseitige Anlagefläche
- 32: Haltelement
- 34: Adapter
- 35: Antriebseinheit
- 36: rahmenseitige Haltelasche
- 38: antriebsseitige Haltelasche
- 40: Adapter
- 42: erster Adapterschenkel
- 44: zweiter Adapterschenkel
- 45: Übergangsradius
- 46: Antriebseinheit
- 48: Endabschnitt
- 50: rahmenseitige Haltelasche
- 52: antriebsseitige Haltelasche

## Patentansprüche

1. Fahrradrahmen (1) mit einer Aufnahmeeinrichtung (6) für eine Antriebseinheit (16, 35, 46), wobei ein Adapter (40) zur Verbindung der Aufnahmeeinrichtung (6) mit der Antriebseinheit (46) vorgesehen ist, wobei der Adapter (40) plattenförmig mit einem ersten Adapterschenkel (44) und einem zweiten Adapterschenkel (42) ausgebildet und zwischen der rahmenseitigen Aufnahmeeinrichtung (6) und der Antriebseinheit (46) angeordnet ist, **dadurch gekennzeichnet, dass** einer der Adapterschenkel (44) mindestens abschnittsweise eine gegenüber dem weiteren Adapterschenkel vergrößerte Dicke (t3) aufweist.

2. Fahrradrahmen nach Anspruch 1, wobei der Adapter (40) eine mechanische Schnittstelle und eine elektrische Schnittstelle ausbildet.

3. Fahrradrahmen nach Anspruch 1 oder 2, wobei der Adapter (40) die zwei Adapterschenkel (42, 44) aufweist, welche L-förmig miteinander verbunden sind.

4. Fahrradrahmen nach einem der vorhergehenden Ansprüche, wobei die Adapterschenkel (42, 44) jeweils gerade ausgebildet und mittels eines Übergangsradius (45) verbunden sind.

5. Fahrradrahmen nach einem der vorhergehenden Ansprüche, wobei der erste Adapterschenkel (44) oberhalb der Antriebseinheit (46) einem Sitzrohr (8) und einem Unterrohr (4) sowie der zweite Adapterschenkel (42) einem Hinterbau (10) zugewandt angeordnet ist.

6. Fahrradrahmen nach einem der vorhergehenden Ansprüche, wobei der erste Adapterschenkel (44) länger als der zweite Adapterschenkel (42) ausgebildet ist.

7. Fahrradrahmen nach einem der vorhergehenden Ansprüche, wobei die beiden Adapterschenkel (42, 44) einen Winkel (α) im Bereich von etwa 80 bis 130 Grad, vorzugsweise von etwa 90 Grad einschließen.

8. Fahrradrahmen nach einem der vorhergehenden Ansprüche, wobei die Dicke (tl, t2) des ersten Adapterschenkels (44) von einem Verbindungsabschnitt zum zweiten Adapterschenkel (42) hin zu seinem freien Endabschnitt (48) zunehmend ausgebildet ist.

9. Fahrradrahmen nach einem der vorhergehenden Ansprüche, wobei der erste Adapterschenkel (44) keilförmig ausgebildet ist.

10. Fahrradrahmen nach einem der vorhergehenden Ansprüche, wobei der Adapter (40) eine rahmenseitige Anlagefläche (26) mit standardisierten Halteelementen (50) aufweist.

11. Fahrradrahmen nach einem der vorhergehenden Ansprüche, wobei der Adapter (40) eine antriebsseitige Anlagefläche (30) mit an die jeweilige Antriebseinheit angepassten Haltelementen (52) aufweist.

12. Fahrradrahmen nach Anspruch 10 oder 11, wobei die Haltelemente (50, 52) als sich von dem Adapter (40) weg erstreckende Befestigungslaschen zur Aufnahme von Befestigungselementen, wie insbesondere Befestigungsschrauben ausgebildet sind.

13. Elektrofahrrad, insbesondere Tiefeinsteigerfahrrad, mit einem Fahrradrahmen nach Anspruch 1.

## Claims

1. Bicycle frame (1) comprising a receiving device (6) for a drive unit (16, 35, 46), an adapter (40) being provided for connecting the receiving device (6) to the drive unit (46), the adapter (40) being formed plate-shaped with a first adapter limb (44) and a second adapter limb (42) and being arranged between the frame-side receiving device (6) and the drive unit (46), **characterised in that** one of the adapter limbs (44) has, at least in portions, an enlarged thickness (t3) by comparison with the further adapter limb.

2. Bicycle frame according to claim 1, wherein the adapter (40) forms a mechanical interface and an electrical interface.

3. Bicycle frame according to either claim 1 or claim 2, wherein the adapter (40) has the two adapter limbs (42, 44), which are interconnected in an L shape.

4. Bicycle frame according to any of the preceding claims, wherein the adapter limbs (42, 44) are each formed straight and are connected by means of a transition radius (45).

5. Bicycle frame according to any of the preceding claims, wherein the first adapter limb (44) is arranged above the drive unit (46), facing a seat tube (8) and a down tube (4), and the second adapter limb (42) is arranged facing a rear triangle (10).

6. Bicycle frame according to any of the preceding claims, wherein the first adapter limb (44) is formed longer than the second adapter limb (42).

7. Bicycle frame according to any of the preceding claims, wherein the two adapter limbs (42, 44) are at an angle (α) in a range of approximately 80 to 130 degrees, preferably approximately 90 degrees.

8. Bicycle frame according to any of the preceding claims, wherein the thickness (t1, t2) of the first adapter limb (44) is formed increasing from a connection portion, for the second adapter limb (42), to the free end portion (48) thereof.

9. Bicycle frame according to any of the preceding claims, wherein the first adapter limb (44) is formed wedge-shaped.

10. Bicycle frame according to any of the preceding claims, wherein the adapter (40) has a frame-side contact face (26) having standardised holding elements (50).

11. Bicycle frame according to any of the preceding claims, wherein the adapter (40) has a drive-side contact face (30) having holding elements (52) adapted to the associated drive unit.

12. Bicycle frame according to either claim 10 or claim 11, wherein the holding elements (50, 52) are formed as fastening tabs, extending away from the adapter (40), for receiving fastening elements, such as in particular fastening screws.

13. Electric bicycle, in particular low-entry bicycle, comprising a bicycle frame according to claim 1.

## Revendications

1. Cadre de bicyclette (1) muni d'un dispositif de réception (6) pour une unité d'entraînement (16, 35, 46), dans lequel un adaptateur (40) est prévu pour relier le dispositif de réception (6) à l'unité d'entraînement (46), l'adaptateur (40) étant réalisé en forme de plaque avec une première branche d'adaptateur (44) et une deuxième branche d'adaptateur (42) et étant disposé entre le dispositif de réception côté cadre (6) et l'unité d'entraînement (46), **caractérisé en ce que** l'une des branches d'adaptateur (44) présente, au moins sur certaines parties, une épaisseur (t3) augmentée par rapport à l'autre branche d'adaptateur.

2. Cadre de bicyclette selon la revendication 1, dans lequel l'adaptateur (40) constitue une interface mécanique et une interface électrique.

3. Cadre de bicyclette selon la revendication 1 ou 2, dans lequel l'adaptateur (40) présente les deux branches d'adaptateur (42, 44) qui sont reliées l'une à l'autre en forme de L.

4. Cadre de bicyclette selon l'une des revendications précédentes, dans lequel les branches d'adaptateur (42, 44) sont chacune de forme rectiligne et reliées au moyen d'un arrondi de transition (45).

5. Cadre de bicyclette selon l'une des revendications précédentes, dans lequel la première branche d'adaptateur (44) est disposée au-dessus de l'unité d'entraînement (46) en regard d'un tube de selle (8) et d'un tube diagonal (4) et la deuxième branche d'adaptateur (42) est disposée en regard d'un cadre arrière (10).

6. Cadre de bicyclette selon l'une des revendications précédentes, dans lequel la première branche d'adaptateur (44) est plus longue que la deuxième branche d'adaptateur (42).

7. Cadre de bicyclette selon l'une des revendications précédentes, dans lequel les deux branches d'adaptateur (42, 44) forment un angle (α) compris entre environ 80 et 130 degrés, de préférence d'environ 90 degrés.

8. Cadre de bicyclette selon l'une des revendications précédentes, dans lequel l'épaisseur (tl, t2) de la première branche d'adaptateur (44) est formée de manière à augmenter d'une partie de liaison à la deuxième branche d'adaptateur (42) vers sa partie d'extrémité libre (48).

9. Cadre de bicyclette selon l'une des revendications précédentes, dans lequel la première branche d'adaptateur (44) est réalisée en forme de coin.

10. Cadre de bicyclette selon l'une des revendications précédentes, dans lequel l'adaptateur (40) présente une surface d'appui côté cadre (26) avec des éléments de retenue (50) standardisés.

11. Cadre de bicyclette selon l'une des revendications précédentes, dans lequel l'adaptateur (40) présente une surface d'appui côté entraînement (30) avec des éléments de retenue (52) adaptés à l'unité d'entraînement respective.

12. Cadre de bicyclette selon la revendication 10 ou 11, dans lequel les éléments de retenue (50, 52) sont réalisées sous la forme de pattes de fixation s'étendant à partir de l'adaptateur (40) pour recevoir des éléments de fixation, tels que, en particulier, des vis de fixation.

13. Bicyclette électrique, en particulier bicyclette à entrée basse, munie d'un cadre de bicyclette selon la revendication 1.
